# EUROPEAN PATENT APPLICATION

(11) **EP 3 114 953 A1**
(43) Date of publication of application: **11.01.2017**
(21) Application number: 15425051.8
(22) Date of filing: 08.07.2015
(51) Int. Cl.: A43B 13/04, A43B 13/18, B29D 35/12, B29C 44/38, C08J 9/12, C08J 9/32

(54) **METHOD OF MOLDING A VULCANIZED FOAM RUBBER SOLE FOR FOOTWEAR AND RELATED SOLE OF VULCANIZED FOAM RUBBER FOR FOOTWEAR**

(71) Applicant: EUROSUOLE S.P.A., 62012 Civitanova Marche MC (IT)
(72) Inventor: Ercoli, Germano, I-62012 Macerata (IT); Basili, Fabio, I-62012 Macerata (IT); Pierluigi, Maicol, I-62012 Macerata (IT); Ruffini, Giorgio, I-62012 Macerata (IT); Ercoli, Rosaria, I-62012 Macerata (IT)
(74) Representative: Pulieri, Gianluca Antonio

(57) **Abstract**

A method of molding a sole (6) in vulcanized foam rubber for footwear, comprising the phases of preparing a rubber in the form of strip, preformed and/or granules, mixing said rubber inside a loading and mixing chamber (10), preparing a mold (4) for the molding of a footwear sole (6), said mold (4) defining a molding chamber (8) counter-shaped with respect to a footwear sole (6), conveying the mixed material inside said molding chamber (8) and molding the footwear sole (6) inside the molding chamber (8), removing the footwear sole (6) from said mold (4). Advantageously, the rubber comprises a foaming agent able to generate an expansion of the material inside the molding chamber (8) during molding, so as to uniformly fill said molding chamber (8) with the foam rubber; furthermore, the method comprises the phase of vulcanization of the foam material inside the molding chamber (8).

## Description

### SCOPE

The present invention relates to a method of molding a vulcanized foam rubber sole for footwear, and a relative vulcanized foam rubber sole for footwear.

### STATE OF THE ART

As is known, in the field of footwear soles, foam materials are used; in particular, the foam materials currently in production in the sole industry are the following:
Polyurethanes - thermoplastics (TPU) and thermosetting materials;
thermoplastic rubbers (TR) and peroxide vulcanized thermoplastics (e.g. EVA);
Vulcanized rubbers.

The latter have particular constraints and limitations, in relation to the dimensional control of the manufactured article obtainable using the molding process.

In fact, with the materials of this family, i.e., with vulcanized rubbers, and with the production technologies currently on the market, it is not possible to obtain molded parts in vulcanized foam rubber with controlled and precise final dimensions, because the expansion process of the materials is not easily controllable.

For this reason, to date, a further "corrective" operation is required on the dimensions of the piece, which consists in removing, by cutting and/or shearing, a layer of material around the perimeter of the piece, until the required dimensions and profile (template) have been achieved.

These production operations, however, represent a major limitation in terms of costs, but above all they rule out the possibility of creating geometries and/or side finishes (vertical walls) of any type.

With the traditional methods used up until now, the possibility does not exist of working on parts with thin thicknesses (less than 5 mm approximately), both at the level of tread and of vertical walls such as sole sides or laterals, and on pieces with big thickness differences between the various sections.

In other words, in the production processes of prior art, we tend to have a more or less uniform thickness to obtain an expansion of the material that is equally as uniform.

Furthermore, the prior art solutions do not permit obtaining particularly lightweight soles.

In prior art therefore, no solutions are known suitable for eliminating the drawbacks and limitations described above and tied to the use of molding techniques with vulcanized and lightweight foam rubbers, suitable for obtaining manufactured articles with finishes and outward appearance the same as those obtained with vulcanized non-foam rubber.

### PRESENTATION OF THE INVENTION

The purpose of the present invention is to provide a method that overcomes the drawbacks mentioned with reference to prior art.

These drawbacks are overcome using a method in accordance with claim 1.

Other embodiments of the present invention are described in the subsequent claims.

### DESCRIPTION OF THE DRAWINGS

Further characteristics and advantages of the present invention will be better understood from the following description of a preferred but not limitative example of the embodiment, wherein:
figure 1 is a schematic view of a method of manufacturing a sole of prior art, wherein following the removal of the sole from the mold, the former must be cut and/or sheared to bring the final dimensions of the sole to required tolerances (as better described hereunder);
figure 2 is a schematic view of a sole obtained by the molding method of the present invention;
figure 3 is an enlarged perspective view of a portion of the sole obtained by the molding methods of prior art, after the final cutting and/or shearing operation mentioned above;
figure 4 is a perspective view of a portion of the sole obtainable with the molding method of the present invention;

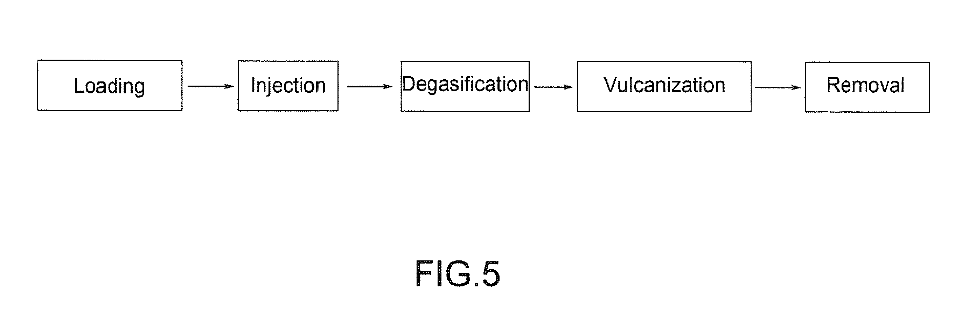

figure 5 is a block diagram of the molding phases according to the present invention;

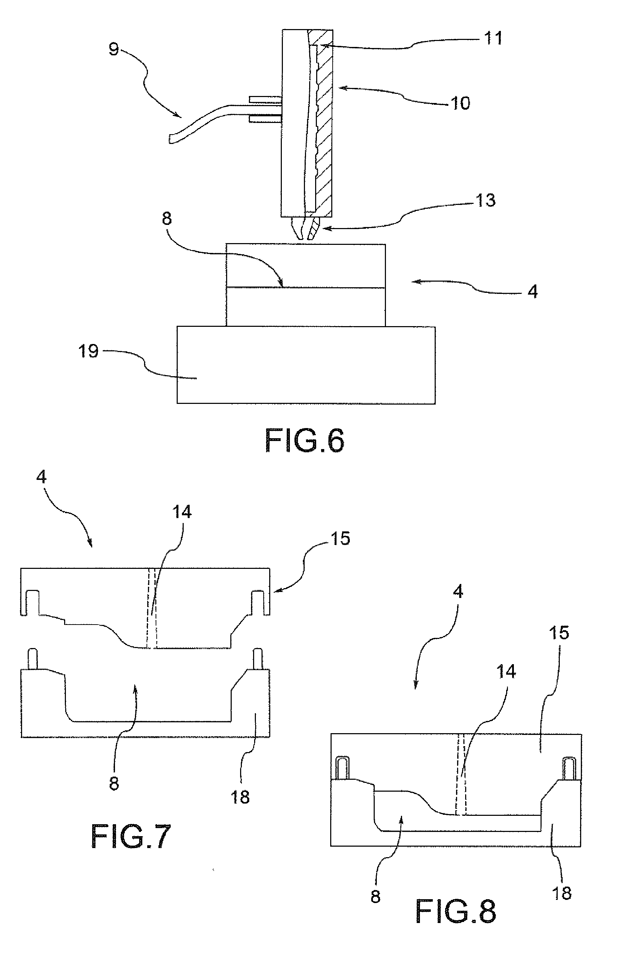

figure 6 is a schematic view of an injection unit and of a mold for the molding method according to the present invention;
figure 7 is a schematic view of a mold for the method of the present invention, in open configuration;
figure 8 is a schematic view of a mold for the method of the present invention, in closed configuration.

### DETAILED DESCRIPTION

With reference to the above illustrations, by 4 has been generally indicated a mold to provide a molding method for footwear soles 6 according to the present invention.

Obviously, for the purposes of the present invention, the representation of the mold is purely approximate; consequently the present invention is not limited to a particular shape and size of said mold which may be due to the most disparate contingent and specific needs of the sole manufacturer.

With regard to materials, molds are preferred made of steel, aluminum or their alloys.

The method of molding a sulfur vulcanized foam rubber sole for footwear according to the present invention comprises the phases of:
preparing a rubber in the form of strip, preformed and/or granules,
preparing a mold for molding a footwear sole, said mold defining a molding chamber 8 counter-shaped with respect to a footwear sole 6,
molding the sole 6 inside the molding chamber 8,
taking the sole 6 out of said mold 4.

More in detail, the rubber is an elastomer preferably having a specific weight, following molding, between 0.30 and 0.90 g/cm3.

As seen, the rubber is loaded in the form of strip 9, preformed and/or granules. The loading of the strip 9 is of the continuous type, obtainable by processing in an extruder, while the loading in preformed and/or granules, of variable dimensions, envisages for example the use of a suitable cutter suitable for cutting the material into the desired sizes.

The material is then loaded into a loading and mixing chamber 10 where it is pressed and mixed. According to a possible embodiment, said loading and mixing chamber is an injection chamber wherein the material is pressed for example by means of a loading screw 11 and sent to a respective injection nozzle 13. Said injection nozzle 13 in turn injects the mixed material inside the molding chamber 8, for example through a supply duct 14. The mold 4, in turn, typically comprises a fixed part 15 and a movable part 18 which, in closed configuration delimit said molding chamber 8. For example, the movable part 18 is in turn supported by a movable press table 19 to allow the movement of the moving part 18, closing the mold 4 and its opening to effect the removal of the piece at the end of molding.

Advantageously, the rubber comprises a foaming agent capable of generating an expansion of the material, i.e., of the rubber, inside the molding chamber 8 during molding, so as to uniformly fill said molding chamber 8 with the foam rubber.

By uniform filling is meant that the cavity defined by the molding chamber 8 must be uniformly and completely filled with the foam material so as to faithfully copy the shape of the chamber, adhering to all the walls of the chamber. This way, the certainty exists that the molded piece will reproduce the shape delimited by the molding chamber 8.

Said foaming agent can be added during the preparation of the rubber compound or added to the rubber during the rubber loading and mixing phase, inside said loading and mixing chamber 10, before the material is introduced into the molding chamber 8.

According to a possible embodiment, said foaming agent is added to the rubber in the form of microspheres, added during the mixing and preparation of the rubber itself.

Preferably, said microspheres are spheres made of thermoplastic material which encloses internally a gas encapsulated inside them.

When the foaming agent is used in the form of microspheres, thermoplastic particles are used, in the form of microspheres of size around µm, which consist of a thermoplastic casing and a gas encapsulated inside it. Said encapsulated gas, expanding under the effect of the variation of pressure/temperature, tends to expand the microspheres themselves which may expand thanks to the deformability of the casing in thermoplastic material enclosing said gas inside it.

Preferably, said microspheres have a diameter between 5 and 50 µm. The choice of a size of microsphere within such a range of diameters allows obtaining the best dimensional control of rubber expansion, therefore the optimal filling of the molding chamber 8, and also the best specific weight of the rubber in the expanded configuration for the application for footwear soles. Preferably, the gas encapsulated in said microspheres belongs to the family of hydrocarbons; e.g., it is an isobutene. The choice of a gas belonging to the family of hydrocarbons allows having an optimum dimensional control of the expansion of the spheres during the molding phases, depending on the pressure and temperature condition inside said molding chamber 8 and, therefore, an optimal filling of the molding chamber 8 itself.

When heated, said casing softens and the gas pressure inside it grows. This results in a consequent increase in the volume of the microsphere, inside which the same initial gas remains in any case trapped. The increase in volume of the microsphere determines the increase in volume of the mass of rubber injected into the molding chamber 8 so that the latter can be completely and uniformly filled.

According to a further possible embodiment, said foaming agent is added at least partly in the form of free gas, inside the loading and mixing chamber 10 in the molding phase, after closing said mold. For example the foaming agent in the form of free gas may comprise nitrogen or carbon dioxide in supercritical state, e.g. for the carbon dioxide a temperature of about 32°C and at a pressure of about 70 bar. These types of gas allow achieving an optimal and controlled expansion of the rubber and, therefore, a complete and homogeneous filling of said molding chamber 8.

In the case of a foaming agent being used in the form of free gas, the gas behind the expansion effect is introduced during the loading/mixing phase of the material inside said loading and mixing chamber 10.

It should be noted that, in accordance with the present invention, it is possible to use a combination of types of foaming agents, i.e., it is possible to foresee a combined use of both microspheres that encapsulate a gas, and a free gas.

The result of this effect of the action of the foaming agent during the molding process is a molded piece of low specific weight. As described above, in fact, following molding, a rubber is obtained having a specific weight between 0.30 and 0.90 g/cm3.

The type of material that results and the volume of the relative products is proportionate in the various directions, and the molded piece is kept perfectly in relation with the imprint of the relative mold, being able to work indifferently either on thin thicknesses and/or larger volumes. No additional operations are required over and above the simple molding cycle to permit the dimensional stabilization of the piece, unlike the case of some foam materials and/or other types of materials, with obvious benefits in terms of production times and costs.

Preferably, the foaming agent is added to the rubber in a weight percentage between 2% and 20% of the material or rubber to be expanded. This weight percentage range is valid both for foaming agent in the form of microspheres and for foaming agent in the form of free gas.

The method according to the present invention further comprises the phase of vulcanization of the foam material inside the molding chamber 8.

Preferably, the vulcanization phase is a sulfur vulcanization. The use of a sulfur vulcanization permits better controlling the dimensional stability of the foam rubber and facilitates the removal operation from the molding chamber 8. Moreover, the foam rubber with sulfur vulcanization has a suitable resistance to tearing and cutting: this feature is particularly advantageous in the footwear industry in case of the sole being associated with the upper, at least partially, by stitching. Thus during the stitching phase, it is essential that the sole have a good resistance to tearing, to prevent the sole itself being torn both during stitching and in the subsequent use of the footwear thus assembled.

During the vulcanization phase, venting or 'degassing' phases are envisaged to permit the controlled escape of the reaction gases produced during vulcanization itself.

According to a possible embodiment of the present invention, said degassing phase is achieved by molding techniques 'with vacuum' which further improve the quality of the molding cycle.

Preferably, the vulcanization phase is obtained by a temperature in the molding chamber 8 between 150 and 180°C.

It should be noted that for the purposes of controlling the expansion of the rubber and of the optimum and homogeneous filling of the molding chamber 8, it is important to adjust the time of rubber expansion in relation to the vulcanization time of the rubber itself. In fact, it is important that the rubber expansion time be less than the vulcanization time of the rubber so that the predefined specific weight of the foam rubber is obtained and therefore the optimum filling of the molding chamber 8. In fact, the completion of vulcanization prevents the expansion of the rubber and it is therefore important that vulcanization terminate only after having reached the predefined specific weight of the foam rubber. Consequently, preferably, the molding method of the present invention envisages:
- determining a predefined or target specific weight of the foam rubber,
- obtaining the complete expansion of the rubber inside the molding chamber 8 until such target specific weight has been reached,
- completing the vulcanization phase of the foam rubber after reaching said target specific weight.

Preferably, the method comprises the phases of adjusting the temperature and/or the parameter of injection into the molding chamber 8 so as to complete the foam rubber vulcanization phase after reaching said predefined or target specific weight.

As seen, advantageously, the method provides for the rubber to be loaded in the molding chamber 8 by means of a loading phase that may include an injection phase.

Preferably, during the loading phase of the rubber into the loading and mixing chamber 10, said loading and mixing chamber 10 is heated to a temperature between 50 and 110°C.

Preferably, the rubber is conveyed or injected into the molding chamber 8 at a pressure between 80 bar and 180 bar.

Altogether, said molding phase lasts between 180 and 360 seconds, far less, even less than half, compared to the duration of the molding phases of prior art solutions.

As can be appreciated from what has been described, the method of the present invention permits overcoming the drawbacks presented in the prior art solutions.

In particular, the type of material produced and the volume of the relative products is proportionate in the various directions, and the molded piece is maintained perfectly in relation with the imprint of the relative mold, being able to work indifferently on thin thicknesses and/or higher volumes.

No additional operations are required over and above the simple molding cycle to enable the dimensional stabilization of the piece, unlike what occurs in some other types of foam materials, with evident benefits in terms of production times and costs.

The very definitely most innovative characteristic never previously obtained in the production of vulcanized foam rubber products is the possibility of making indifferently the same type of sole (in terms of design, finishes, thicknesses ...) using standard material (not foam) and foam material, working with molds of the same identical type as those normally used with non-foam material.

No additional costs are therefore foreseen in terms of molds and/or equipment required to make a piece.

It is reiterated that, with the traditional methods used until now, the possibility does not exist of working on pieces with thin thicknesses (below about 5 mm), both at the level of the tread and of the vertical walls such as side walls or laterals of the sole, and on pieces which have big thickness differences between the various sections. Consequently, in the known solutions, we have dimensional tolerances that are difficult to control and which vary greatly, making it necessary to make a sole of increased size (especially in terms of perimeter) before then having to remove the excess perimeter material by means of cutting and/or shearing, after its removal from the mold: this way, we are unable to obtain a precise surface finish, but rather obtain a rough and wrinkled finish.

Prior art solutions therefore require corrective machining operations as regards dimensions, once the piece has been removed from the mold. Such machining operations give the piece a 'cut' and/or ' 'sheared' look and do not allow obtaining a high definition of the sole for example on the side walls, or obtaining for example particular ornamental patterns on said side walls of the sole, such as, for example, bas-reliefs, grooves and the like. This aspect constitutes a strong limitation for the characterization of the sole which instead is an element of the footwear equivalent to the upper.

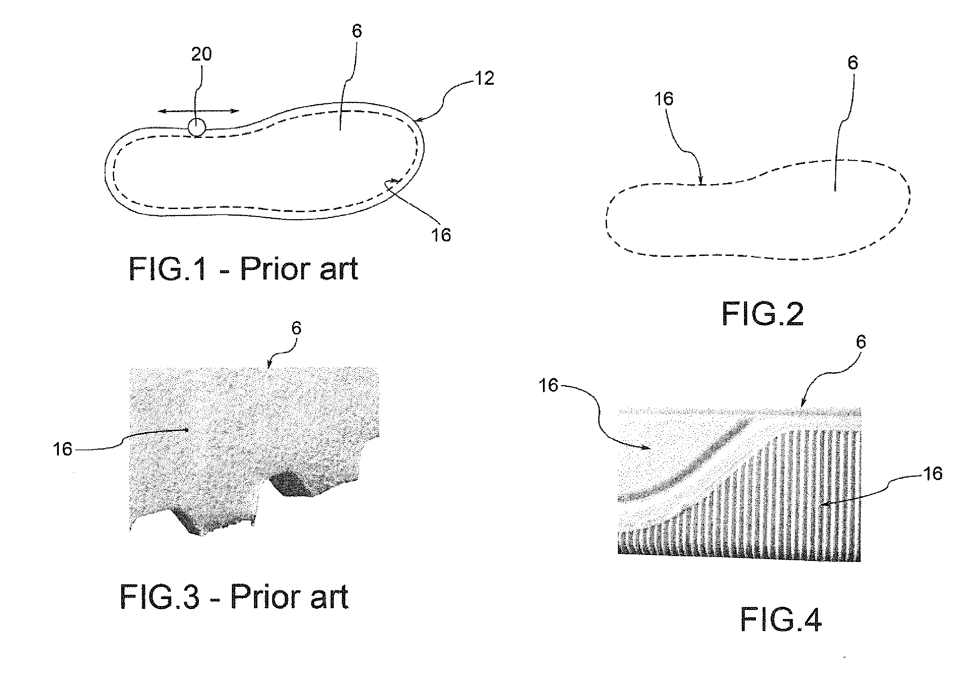

An example of such limitations is clearly visible in figures 1 and 3, relating to prior-art solutions. In particular in figure 1 a schematic plan view is shown of a sole molded according to the molding techniques of prior art, wherein an outer perimeter profile 12 has been obtained slightly greater than the final perimeter profile 16 (shown by a dotted line) which the sole must have. Such excess rubber is then removed with a cutter 20 and/or with a shearing tool, which runs along the profile of the sole, as schematically shown in figure 1.

Figure 3 represents the type of surface roughness that is obtained as a result of said cutting and/or shearing operation made necessary by the surplus of material along the perimeter obtained by the molding techniques of prior art which do not permit having adequate dimensional control.

These technical limitations, as has been seen, are solved by a method of molding in accordance with the present invention which permits obtaining extremely precise surface finishes, with very low thicknesses, of around one millimeter, without having to resort to any mechanical finishing operation.

This way, on the one hand, otherwise impossible surface finishes are obtained, providing the designer with greater freedom of expression, and on the other, avoiding a slow and costly final surface finish operation, thereby reducing sole production times and costs.

These advantages are well schematized in figures 2 and 4. In particular, figure 2 shows an example of a sole 6 obtainable using the method of the present invention: as can be easily noted, the sole removed from the mold already has the correct final perimeter profile 16, without any need to resort to surface finishing/material removal operations. This is possible thanks to the remarkable and precise dimensional control achievable thanks to the method of the present invention. Furthermore, as clearly shown in figure 4, the piece obtained from molding according to the present invention permits obtaining a precise surface finish, and reproducing even complex geometries, according to the needs of the sole designer.

Furthermore, the prior art sole molding solutions require building molds with specific characteristics, while this need does not exist thanks to the method of the present invention: this way there is a further reduction of costs.

Moreover, the solution of the present invention allows also reducing the weight of the sole and therefore of the footwear because it allows obtaining a vulcanized foam rubber sole having a specific weight between 0.3 and 0.9, whereas the prior art molding solutions by compression allow obtaining a sole material having a specific weight of between 0.4 and 1.0.

As regards the production time of the sole, it should be noted that the compression molding of prior art requires a time of not less than about 10 minutes while the injection molding of the present invention requires a time of less than 5 minutes.

Furthermore, the injection solution of vulcanized rubber foam of the present invention makes it possible to cut the injection time by approximately 70% compared to the known injection solutions of non-foam rubbers.

Obviously such a significant reduction in time results in an equally significant reduction in sole production costs.

A man skilled in the sector, in order to satisfy contingent and specific requirements, may make numerous modifications and variations to the molding methods described above, all however contained within the scope of the invention as defined by the following claims.

## Claims

1. Method of molding a sole (6) in vulcanized foam rubber for footwear comprising the phases of:
- preparing a rubber in the form of strip, preformed and/or granules,
- mixing said rubber inside a loading and mixing chamber (10),
- preparing a mold (4) for molding a footwear sole (6), said mold (4) defining a molding chamber (8) counter-shaped with respect to the footwear sole (6),
- conveying the material mixed inside said molding chamber, (8) and molding the footwear sole (6) inside the molding chamber (8),
- removing the footwear sole (6) from said mold (4), the method being **characterized in that**
- the rubber comprises a foaming agent able to generate an expansion of the material inside the molding chamber (8) during molding, so as to uniformly fill said molding chamber (8) with the foam rubber;
- the method comprises the phase of vulcanizing the foam material inside the molding chamber (8).

2. Molding method according to claim 1, wherein the loading and mixing chamber (10) is an injection chamber and wherein the rubber is loaded into the molding chamber (8) by means of an injection phase.

3. Molding method according to claim 1 or 2, wherein said foaming agent is added to the rubber in the form of microspheres, added during the phase of mixing and preparation of the rubber itself.

4. Molding method according to claim 3, wherein said microspheres have a diameter between 5 and 50 µm.

5. Molding method according to claim 3 or 4, wherein said microspheres are spheres made of thermoplastic material internally enclosing a gas encapsulated inside them.

6. Molding method according to claim 5, wherein the gas encapsulated in said microspheres belongs to the family of hydrocarbons.

7. Molding method according to any one of the preceding claims, wherein said foaming agent is added at least partially in the form of free gas, inside the loading and mixing chamber (10) during the loading and mixing phase.

8. Molding method according to claim 7, wherein the foaming agent in the form of free gas comprises nitrogen or carbon dioxide in supercritical state.

9. Molding method according to any one of the preceding claims, wherein the foaming agent is added to the rubber in a weight percentage between 2% and 20% of the material or rubber to be expanded.

10. Molding method according to any one of the claims 1 to 9, wherein during the phase of loading the rubber into the loading and mixing chamber (10), said loading and mixing chamber (10) is heated to a temperature between 50 and 110° C.

11. Molding method according to any one of the claims from 1 to 10, wherein the rubber is conveyed or injected into the molding chamber (8) at a pressure between 80 bar and 180 bar.

12. Molding method according to any one of the preceding claims, wherein the vulcanization phase is a sulfur vulcanization.

13. Molding method according to any one of the preceding claims, wherein during the phase of vulcanization, venting (degassing) phases are provided to permit the controlled escape from the molding chamber (8) of the product reaction gas during vulcanization.

14. Molding method according to claim 13, wherein said degassing phase is achieved by molding techniques 'with vacuum'.

15. Molding method according to any one of the preceding claims, wherein the vulcanization phase is obtained by a temperature in the molding chamber (8) between 150 and 180°C.

16. Molding method according to any one of the preceding claims, wherein said molding phase has a total duration of between 180 and 360 seconds.

17. Molding method according to any one of the preceding claims, in which the rubber is an elastomer having a specific weight, following molding, between 0.30 and 0.90 g/cm3.

18. Molding method according to any one of the preceding claims, comprising the following phases:
- determining a predefined or target specific weight of the foam rubber,
- obtaining the complete expansion of the rubber inside the molding chamber (8) until said target specific weight is reached,
- completing the phase of vulcanization of the foam rubber after achieving said target specific weight.

19. Molding method according to claim 18, comprising the phases of adjusting the injection temperature and/or parameters in the molding chamber (8) so as to complete the vulcanization phase of the foam rubber after the achievement of said target specific weight.
